# EUROPEAN PATENT APPLICATION

(11) **EP 4 818 017 A2**
(43) Date of publication of application: **07.10.2026**
(21) Application number: 26169288.3
(22) Date of filing: 30.03.2026
(51) Int. Cl.: B62K 3/02, B62K 21/02, B62K 25/08

(54) **INVERTED BICYCLE FORK**

(30) Priority: 01.04.2025 US 202563781780 P
(71) Applicant: Specialized Bicycle Components, Inc., Morgan Hill, CA 95037 (US)
(72) Inventor: McAndrews, Michael Lawrence, Aptos, CA (US)
(74) Representative: Forresters IP LLP

(57) **Abstract**

A bicycle may include a front wheel, a rear wheel, and a frame supported by the front wheel and the rear wheel. The frame may include a front fork having a fork upper with a fork upper leg. The front fork may further include a suspension assembly having a suspension element positioned at least partially within the fork upper leg. The suspension element may include a first body and a second body. The first body may be configured to slide axially over the second body along a longitudinal axis. The second body may be secured to the fork upper leg with a fastener to inhibit rotation of the second body relative to the fork upper leg.

## Description

### CROSS-REFERENCE TO RELATED APPLICATIONS

This application claims priority to U.S. Provisional Application No. 63/781,780, filed April 1, 2025.

### FIELD

The present disclosure relates generally to bicycle suspension forks, and more specifically to inverted bicycle suspension forks.

### BACKGROUND

A bicycle may include one or more suspension assemblies that absorb and damp shocks exerted on the bicycle such as by uneven terrain and other kinetic impacts. The suspension assembly(s) may be located on and/or within a frame of the bicycle. In some examples, the suspension assembly(s) may include a front suspension assembly. For example, the front suspension assembly may include a telescopic front fork suspension assembly located on or within or otherwise formed as part of a front fork. A front fork in combination with a front suspension assembly (e.g., telescopic front fork suspension assembly) may be referred to as a bicycle suspension fork. Some bicycle suspension forks are inverted bicycle suspension forks. Inverted bicycle suspension forks may be desirable for their sensitive and smooth performance, but may sometimes suffer from having limited torsional stiffness.

### BRIEF DESCRIPTION OF THE DRAWINGS

FIG. 1 is a right side view of a bicycle according to one example, including an inverted front fork having a suspension assembly.
FIG. 2 is a rear perspective view of one example of the front fork, for use with the bicycle of FIG. 1 or any other bicycle.
FIG. 3 is an exploded, perspective view of the front fork, illustrating a fork upper, a first suspension element of the suspension assembly, and a second suspension element of the suspension assembly.
FIG. 4 is a front view of the front fork of FIG. 2.
FIG. 5 is a left side view of the front fork of FIG. 2.
FIG. 6 is a perspective view of the first suspension element of the suspension assembly of the front fork, the first suspension element having a first body and a second body.
FIG. 7 is an exploded view of the first suspension element of FIG. 6.
FIG. 8 is a cross-sectional view of the first suspension element taken along line 8-8 in FIG. 6.
FIG. 9 is a perspective view of the second body of the first suspension element of FIG. 6.
FIG. 10 is an exploded view of the second body of the first suspension element of FIG. 6.
FIG. 11 is a cross-sectional view of the second body of the first suspension element.
FIG. 12 is a perspective view of a fastener for rotationally fixing the second body to the fork upper.
FIG. 13 is a partial, perspective view of a portion of the first suspension element, illustrating a keyed region for rotationally fixing the first body to the second body.
FIG. 14 is a partial, perspective view of the front fork, illustrating a press fit bushing coupled to a fork crown of the front fork.
FIG. 15 is a perspective view of the press fit bushing of FIG. 14.

### DETAILED DESCRIPTION

Before any examples of the disclosure are explained in detail, it is to be understood that the disclosure is not limited in its application to the details of the examples and the arrangement of components set forth in the following description or illustrated in the accompanying drawings. The disclosure can support other constructions and of being practiced or of being carried out in various ways.

According to one example, a bicycle may include a front wheel, a rear wheel, and a frame supported by the front wheel and the rear wheel. The frame may include a front fork having a fork upper with a fork upper leg. The front fork may further include a suspension assembly having a suspension element positioned at least partially within the fork upper leg. The suspension element may include a first body and a second body. The first body may be configured to slide axially over the second body along a longitudinal axis. The second body may be secured to the fork upper leg with a fastener to inhibit rotation of the second body relative to the fork upper leg.

According to another example, a bicycle may include a front wheel, a rear wheel, and a frame supported by the front wheel and the rear wheel. The frame may include a front fork having a fork upper with a fork upper leg. The front fork may further include a suspension assembly having a suspension element positioned at least partially within the fork upper leg. The suspension element may include a first body and a second body. The first body may be configured to slide axially over the second body along a longitudinal axis. The first suspension element may include a keyed region that inhibits rotational movement of the first body relative to the second body.

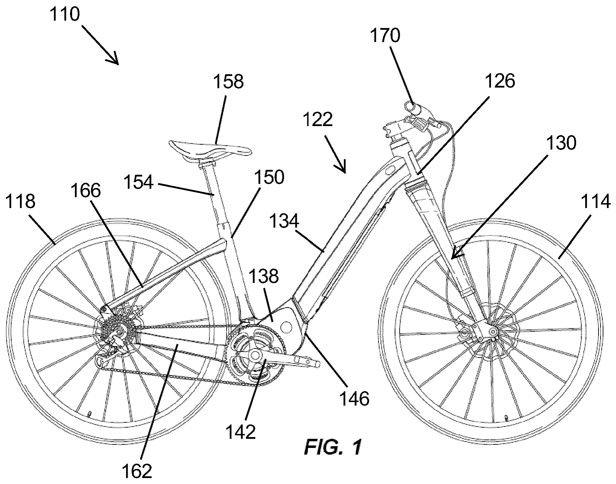

FIG. 1 illustrates a bicycle 110 having a front wheel 114, a rear wheel 118, and a frame 122 supported by the front wheel 114 and the rear wheel 118. Although the bicycle 110 is illustrated in FIG. 1 as an electric, active style bicycle, in other examples the bicycle 110 may be a road bicycle, a mountain bicycle, a gravel bicycle, a hybrid bicycle, and/or other type of bicycle, which may or may not have an electric motor. Further, although a particular configuration of the frame 122 is illustrated in FIG. 1, the bicycle 110 may be implemented with other configurations of the frame 122 than that which is illustrated. In these examples, the frame 122 may be implemented with other configurations having different shapes, sizes, and/or frame components.

In some examples, the frame 122 may include a head tube 126, a front fork 130 rotationally supported by the head tube 126, and/or a down tube 134 connected to the head tube 126 and extending rearward from the head tube 126. The down tube 134 may be sized and shaped to receive a battery. Other examples may not include a battery. While not illustrated, in some examples the frame 122 may also, or alternatively, include a top tube connected to and extending rearward from the head tube 126 (e.g., above the down tube 134).

In some examples, the frame 122 may include a bottom bracket 138, and the down tube 134 may extend generally downward from the head tube 126 and toward the bottom bracket 138 of the frame 122. The bottom bracket 138 may receive a crankset 142 of a drivetrain of the bicycle 110. A motor assembly 146, located for example at or near the bottom bracket 138, may be coupled for example to the battery and may generate powered rotation of the drivetrain.

In some examples, the frame 122 may include a seat tube 150. The seat tube 150 may be connected, for example, to the bottom bracket 138 and/or to a top tube if included. The seat tube 150 may support a seat post 154 and a seat 158. For example, the seat tube 150 may receive the seat post 154, which may support the seat 158. The seat post 154 and/or the seat 158 may be adjustable (e.g., vertically) relative to the seat tube 150, such as, for example, to accommodate for different sizes of riders and/or for different slopes of terrain.

In some examples, the frame 122 may include a chainstay 162 and/or a seatstay 166. The frame 122 may include a frame triangle (e.g., a rear triangle) that supports the rear wheel 118, and the frame triangle may include the chainstay 162 and/or the seatstay 166. Further, the frame 122 may include a second chainstay and/or seatstay, and a second frame triangle (e.g., rear triangle) that supports the rear wheel 118 on an opposite side of the rear wheel 118. The second chainstay can be similar or identical to chainstay 162, and/or the second seatstay can be similar or identical to seatstay 166.

The bicycle 110 may also include a handlebar 170 for turning the front wheel 114 via the front fork 130. The handlebar 170 may be coupled to the head tube 126, for example, and/or to a top tube if a top tube is included.

With reference to FIGS. 1-4, the bicycle 110 may include at least one suspension assembly located at one or more positions on the bicycle 110, including on or within the frame 122 (e.g., on or at least partially within the front fork 130, and/or formed as part of the front fork 130). The suspension assembly(s) may absorb and damp shocks exerted on the bicycle 110 such as by uneven terrain and other kinetic impacts, and may include springs (e.g., coil springs, fluid or air springs, elastomer springs), dampers, resilient materials, and/or other elements that individually, or in combination, function to absorb and damp shocks exerted on the bicycle 110.

In some examples, one or more of the suspension assembly(s) may be coupled (e.g., directly coupled) between two frame components of the frame 122. In other examples, one or more of the suspension assembly(s) may be coupled (e.g., directly coupled) between a frame component of the frame 122 and one or more of the front wheel 114 and the rear wheel 118. In yet other examples, one or more of the suspension assembly(s) may be coupled (e.g., directly coupled) between a frame component of the frame 122 and the handlebar 170, the seat post 154, and/or the seat 158. In these or other examples, other quantities and/or positions of suspension assemblies may be implemented. In many examples, one or more of the suspension assembly(s) may be a front suspension assembly (e.g., a telescopic front fork suspension assembly) of the bicycle 110. The front fork 130 in combination with the front suspension assembly (e.g., telescopic front fork suspension assembly) may form a bicycle suspension fork of bicycle 110.

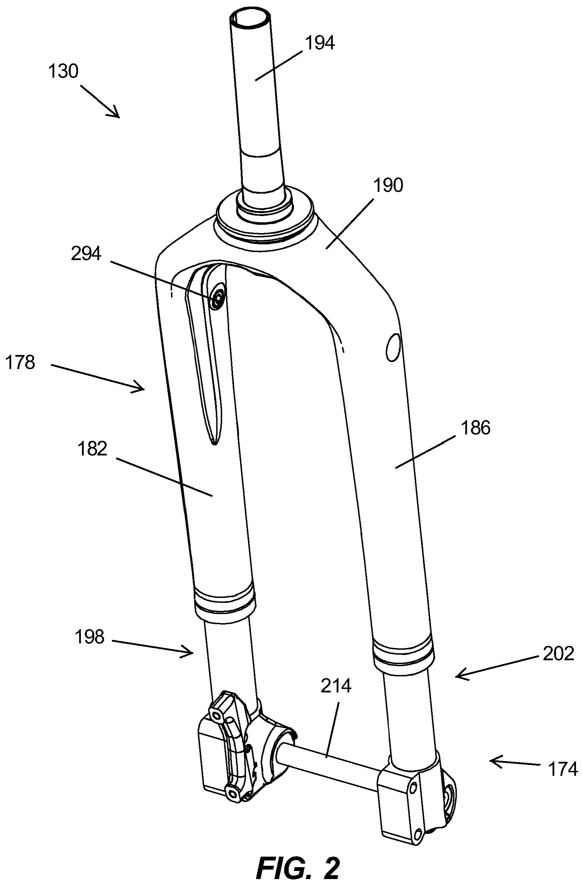

With reference to FIGS. 2-4, in the illustrated example the front fork 130 is an inverted front fork of an inverted bicycle suspension fork having a suspension assembly 174 for absorbing and damping shocks exerted on the bicycle 110 through the front wheel 114. Further, the suspension assembly 174 of the front fork 130 in the illustrated example is a telescopic front fork suspension assembly.

As illustrated in FIGS. 2-4, the front fork 130 may include a fork upper 178 having a first fork upper leg 182, a second fork upper leg 186, and a fork crown 190 that connects the first fork upper leg 182 to the second fork upper leg 186. In some examples, the first fork upper leg 182, the second fork upper leg 186, and the fork crown 190 may be integrally formed as a single monolithic structure. In the illustrated example, the first fork upper leg 182 and the second fork upper leg 186 extend generally parallel to one another, and are hollow tubes. The fork crown 190 generally arches from an upper end of the first fork upper leg 182 over to the second fork upper leg 186. Other examples may include other numbers and arrangements of fork legs, fork crowns, and/or other fork components than that illustrated.

In many examples, the fork upper 178 may be formed from aluminum or another metal material. In other examples, the fork upper 178 may be formed from a composite material, such as, for example, a carbon fiber composite material.

With continued reference to FIGS. 2-4, a steerer tube 194 may be coupled to (e.g., welded to or otherwise fixed to) and extend upwardly from the fork crown 190 (e.g., from an upper, central area of the fork crown 190). The steerer tube 194 may be received within the head tube 126, and may be coupled (e.g., clamped) to a stem of the handlebar 170 within the head tube 126, such that rotation of the handlebar 170 generates a rotation of the front fork 130.

With continued reference to FIGS. 2-4, the suspension assembly 174 may include a first suspension element 198 that is positioned at least partially within the first fork upper leg 182 and a second suspension element 202 that is positioned at least partially within the second fork upper leg 186. At least a portion of the first suspension element 198 may be sized and shaped to slide relative to, and within, the first fork upper leg 182. Similarly, at least a portion of the second suspension element 202 may be sized and shaped to slide relative to, and within, the second fork upper leg 186.

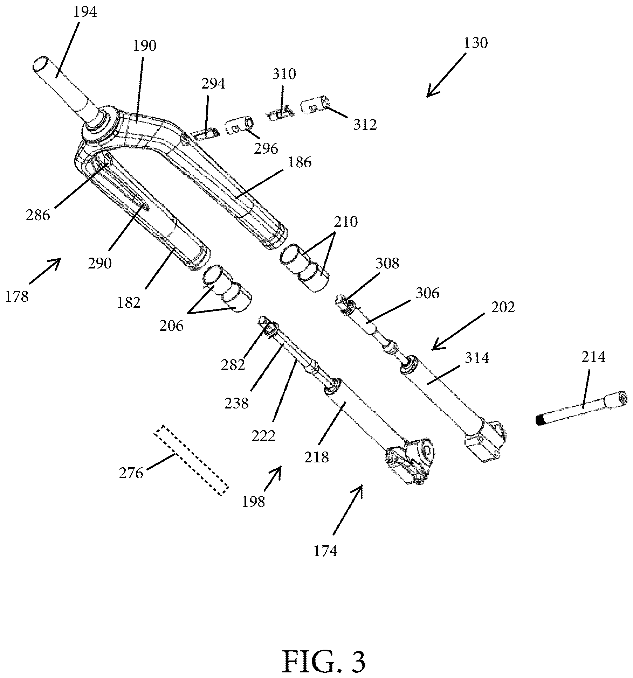

In the illustrated example, and with reference to FIG. 3, the front fork 130 may include one or more bushings that are received within one or more of the first fork upper leg 182 and the second fork upper leg 186, to facilitate a sliding movement. For example, and as illustrated, the front fork 130 may include a first bushing set 206 for use with the first fork upper leg 182, and a second bushing set 210 for use with the second fork upper leg 186. Other examples may not include bushings, or may include other structures that facilitate sliding movement of the first suspension element 198 within the first fork upper leg 182 and the second suspension element 202 within the second fork upper leg 186. In some examples, grease or other lubricating substances may also, or alternatively, be used to facilitate the sliding movement.

With continued reference to FIGS. 2-4, the first suspension element 198 may act as and/or include a spring (e.g., a coil spring, an air spring), and the second suspension element 202 may act as and/or include a damper (e.g., a hydraulic damper, a through-shaft damper), or vice versa. In some examples, one or both of the first suspension element 198 and the second suspension element 202 may include both a spring and a damper. For example, the second suspension element 202 may include both a spring (e.g., a coil spring, an air spring) and a damper, and the first suspension element 198 may include only a spring (e.g., a coil spring, an air spring). In other examples, the first suspension element 198 may not act as or include a spring, or otherwise serve any shock absorbing or damping purpose. In some examples, the second suspension element 202 may include one or more components of a conventional damper or hydraulic damper of a telescopic front fork suspension assembly. In yet other examples, the front fork 130 may include only a single suspension element (e.g., a coil spring, an air spring, a hydraulic damper, or a combination of both a coil spring or an air spring and a hydraulic damper) that is positioned at least partially within either the first fork upper leg 182 or the second fork upper leg 186. Other examples include other numbers and arrangements of suspension elements.

With continued reference to FIGS. 2-4, the first suspension element 198 may be part of the overall front fork 130, and/or the second suspension element 202 may be part of the overall front fork 130. In these examples, the first suspension element 198 and/or the second suspension element 202 may be considered as part of the chassis of the front fork 130, along with the first fork upper leg 182 and the second fork upper leg 186. The bicycle 110 may include additional suspension systems other than the suspension assembly 174 (e.g., suspension systems located on other regions of the bicycle 110). Other quantities and/or positions of a suspension system(s) may be implemented.

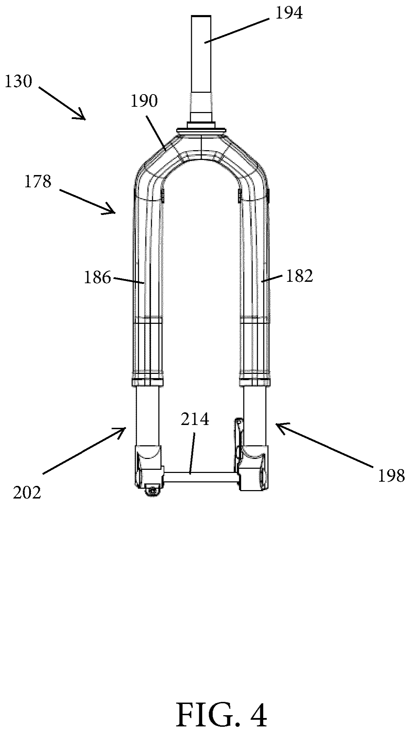

With reference to FIGS. 3 and 4, the suspension assembly 174 may include an axle 214 that is coupled (e.g., fixed) to each of the first suspension element 198 and the second suspension element 202 (e.g., at a lower end of each of the first suspension element 198 and the second suspension element 202). The front wheel 114, seen in FIG. 1, may be positioned for example between the first suspension element 198 and the second suspension element 202, such that the axle 214 passes through the front wheel 114 to permit rotation of the front wheel 114 about the axle 214.

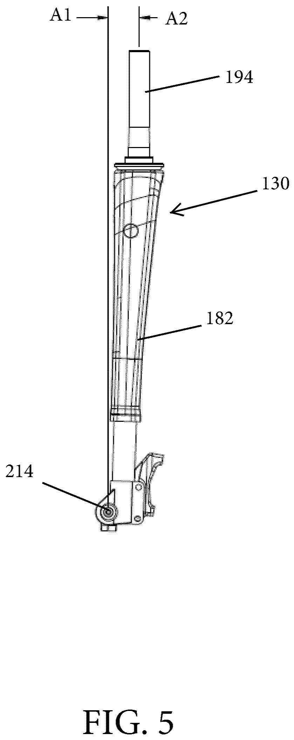

With reference to FIG. 5, in some examples the front fork 130 and/or the steerer tube 194 may be angled relative to a vertical axis A1 that passes through the axle 214 when the bicycle 110 is resting on level ground. For example, a steerer tube axis A2 may be angled relative to the vertical axis A1 at an acute angle (e.g., 5 degrees, 10 degrees, 15 degrees, 20 degrees, 25 degrees, between 0 degrees and 25 degrees, or other values and ranges of values).

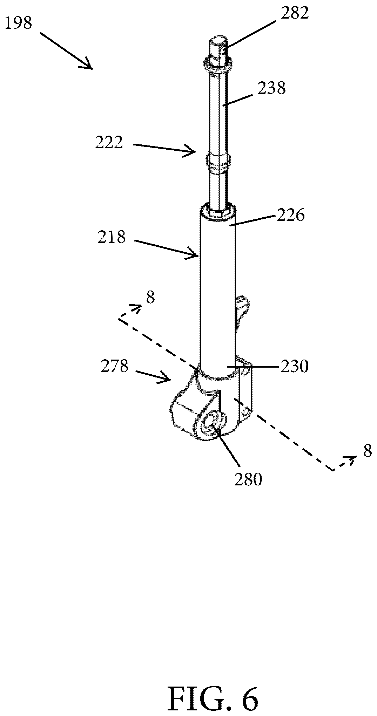

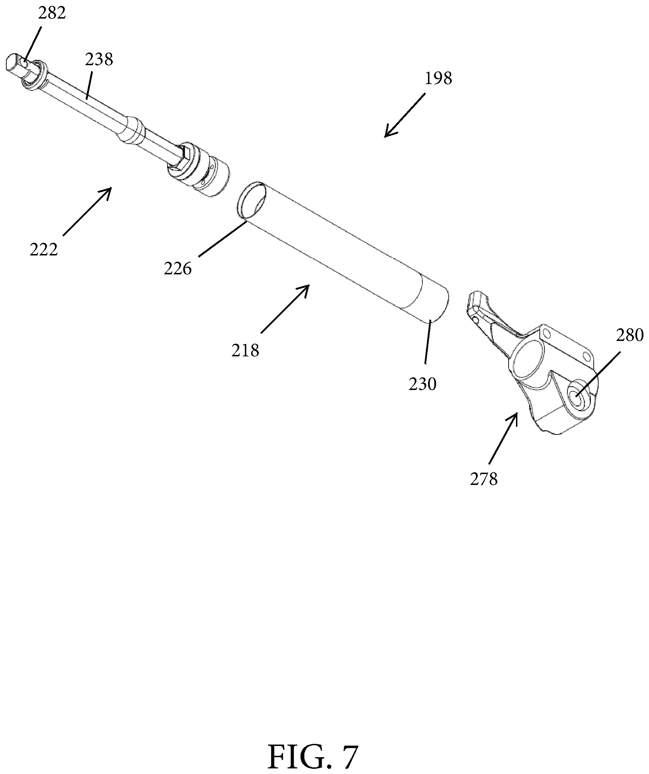

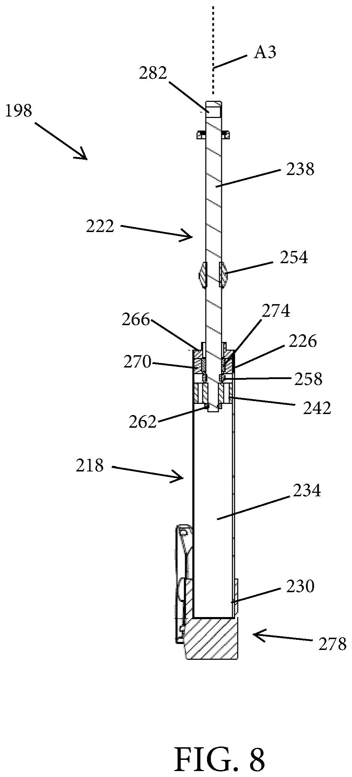

With reference to FIGS. 6-8, the first suspension element 198 may include both a first body 218 (e.g., a reservoir) and a second body 222 that move (e.g., slide) relative to one another. In the illustrated example, the first body 218 is an elongate, generally hollow tubular body (e.g., stanchion tube) that extends along an axis A3 (e.g., a longitudinal axis as seen in FIG. 8), and is hollow. In some examples, the axis A3 is different than both the axis A1 and the axis A2 described above.

As illustrated in FIGS. 6-8, the first body 218 may have an upper end 226 and an opposite, lower end 230. The first body 218 may have a circular cross-sectional shape. Other examples may include other shapes and/or sizes than that illustrated (e.g., a first body 218 having a non-circular cross-sectional shape such as a square, oval, etc.). As illustrated in FIG. 8, the first body 218 may define an interior chamber 234 (e.g., filled at least partially with air or other fluid) positioned below the second body 222.

With continued reference to FIGS. 6-8, the first body 218 may slide relative to the second body 222, and at least partially over the second body 222, along the axis A3. For example, the first body 218 may slide vertically upwardly along the axis A3, passing over at least a portion of the second body 222.

With reference to FIGS. 8-11, in some examples the second body 222 may include an extension rod 238 and a piston 242 coupled (e.g., fixed) to the extension rod 238 (e.g., at a lower end of the extension rod 238) and positioned within the interior chamber 234. The extension rod 238 may extend along (or parallel to) the axis A3. Other examples of the second body 222 may include other numbers, sizes, and/or arrangements of pistons, extension rods, and/or other components than that illustrated. Additionally, in some examples, the extension rod 238 may be solid, whereas in other examples one or more regions of the extension rod 238 may be hollow. In some examples the extension rod 238 may have a non-circular cross-sectional shape taken along a plane perpendicular to the axis A3 along at least a portion of the extension rod 238, while in other examples the extension rod 238 may have a circular cross-sectional shape.

With reference to FIG. 8, the first body 218 may slide linearly along the axis A3 relative to the second body 222, and the second body 222 may for example compress a spring (e.g., a fluid or air spring, a coil spring, an elastomeric spring) positioned within or outside of the hollow interior chamber 234 of the first body 218. As seen in FIG. 8, the hollow interior chamber 234 may be filled with air. In some examples, the first suspension element 198 may be an air spring that uses the interior chamber 234 as a spring compressed by the piston 242.

In yet other examples, the piston 242 may act solely as a guide piston (e.g., guiding travel of the second body 222 but not providing a damping effect). For example, the first body 218 may include one or more regions that permit movement of fluid (e.g., air) axially around and/or through the first body 218 and/or around or through the piston 242. The piston 242 may include channels that permit air to bleed through the piston 242, so that the interior chamber 234 does not act like an air spring.

In some examples, the piston 242 and/or other portion of the second body 222 may include, for example, a gasket, or flexible membrane, that flexes and/or slides along an interior surface of the first body 218. For example, the outer gasket or flexible membrane may seal or partially seal a first volume of the hollow interior chamber 234 from a second volume of the hollow interior chamber 234. Other examples may not include a gasket or flexible membrane.

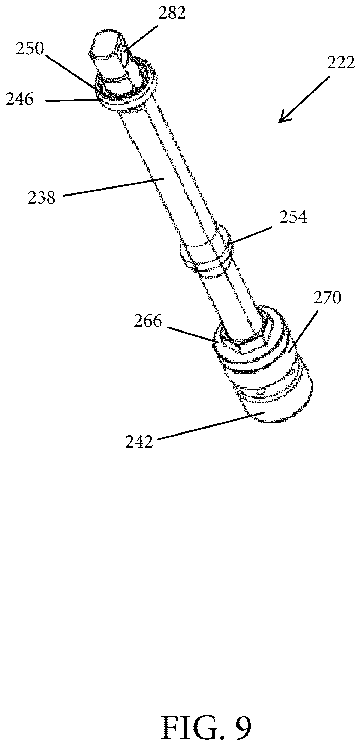

With reference to FIGS. 9-11, in some examples the second body 222 may include a spring retainer (e.g., collar) 246 positioned generally at an upper end of the extension rod 238, and a wire clip 250 that secures the spring retainer 246 to the extension rod 238. The second body 222 may also include a first bumper 254 that is positioned along the extension rod 238 (e.g., to absorb a bottom out for the piston 242). In the illustrated example, the first bumper 254 is located generally centrally along the extension rod 238, but in other examples the first bumper 254 may be positioned closer to the spring retainer 246 and/or to the upper end of the extension rod 238 (e.g., based on a distance traveled by the piston 242 within the interior chamber 234).

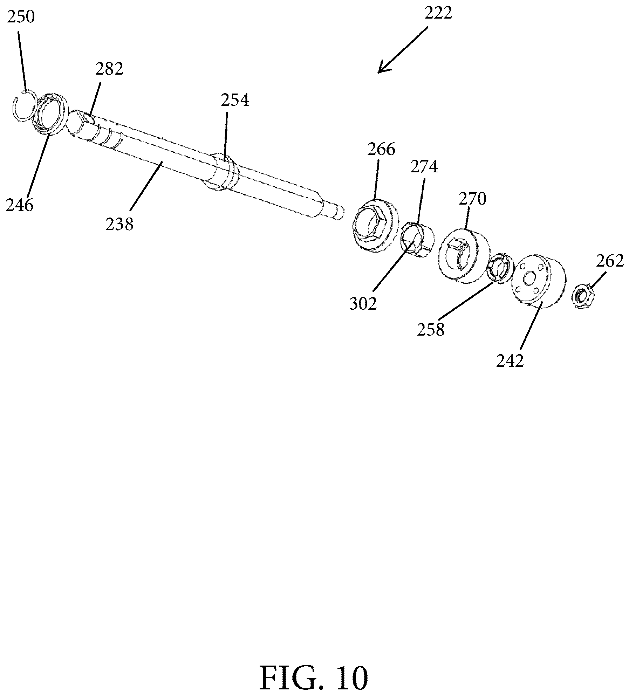

With continued reference to FIGS. 9-11, the second body 22 may additionally include a second bumper 258 (FIG. 10) that is positioned generally above the piston 242 (e.g., to provide a top out for the piston 242), and/or a nut 262 (FIG. 10) that is positioned below the piston 242 to secure the piston 242 to the extension rod 238. In some examples, a bumper may also, or alternatively, be positioned along a bottom of the interior chamber 234.

With continued reference to FIGS. 9-11, the first suspension element 198 may include a jam nut 266 coupled to the first body 218 (e.g., fixed to the first body 218 via threading), a bushing receiver 270 coupled to the first body 218 (e.g., fixed to the first body 218 via threading), and/or a keyed bushing 274 (e.g., insert) that is sandwiched between the bushing receiver 270 and the jam nut 266.

As illustrated in FIG. 8, the jam nut 266, the bushing receiver 270, and the keyed bushing 274 may be positioned (and remain stationary) within the first body 218 (e.g., at an upper end of the first body 218), and as described further below may aid in overall positioning and/or movement (e.g., keyed movement) of the first body 218 relative to the second body 222. In some examples, any of the jam nut 266, the bushing receiver 270, and/or the keyed bushing 274 may be omitted or replaced with another component or components that are positioned (and remain stationary) within the first body 218.

Other examples of the suspension assembly 174 may include other components and combinations of components. For example, the first bumper 254 and/or the second bumper 258 (and/or other components) may be omitted entirely on a non-damped side of the suspension assembly 174 (e.g., on the first suspension element 198), but one or more bumpers (and/or other components) may be provided on a damped side of the suspension assembly 174 (e.g., on the second suspension element 202).

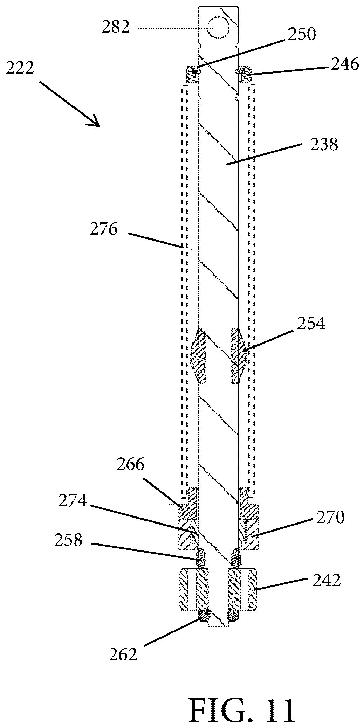

With continued reference to FIGS. 9-11, in some examples a spring element such as a coil spring 276 (illustrated schematically in FIG. 11 and also FIG. 3) may be positioned between the spring retainer 246 and the jam nut 266. The wire clip 250 described above may be positioned within a groove near the upper end of the extension rod 238, and may inhibit the spring retainer 246 from popping off of the extension rod 238 when the coil spring 276 is compressed. A separate coil spring may also be provided for example in the second suspension element 202. In other examples, a coil spring may only be provided on one of the first suspension element 198 or the second suspension element 202.

With reference to FIGS. 6-8, the first suspension element 198 may further include a third body 278 that is coupled to (e.g., receives and/or is fixed to) a lower end of the first body 218. The third body 278 may include, for example, an aperture 280 that is sized and shaped to receive the axle 214. In some examples, the third body 278 may be integrally formed as a single monolithic piece with the first body 218. The second suspension element 202 may similarly include a body (e.g., third body or other structure) with an aperture to receive the axle 214.

With reference to FIGS. 1-13, and as described above, inverted forks may suffer from having limited (e.g., insufficient) torsional stiffness. Accordingly, in the illustrated example it may be advantageous to inhibit the second body 222 from rotating relative to the first fork upper leg 182, and/or to inhibit second body 222 from rotating relative to the first body 218, to increase the overall torsional stiffness of the front fork 130. This increase in torsional stiffness may be achieved in various ways.

For example, a portion of the second body 222 (e.g., the extension rod 238) may be rotationally fixed to the first fork upper leg 182. As illustrated in FIGS. 6-8, the extension rod 238 may include an extension rod aperture 282 (e.g., eyelet). In the illustrated example, the extension rod aperture 282 may be located generally at an upper end of the extension rod 238, and the piston 242 may be located at an opposite, lower end of the extension rod 238. In some examples, the extension rod 238 may include a larger diameter eyelet at the upper end of the extension rod 238 that includes the extension rod aperture 282, the eyelet being a separate piece or integrally formed as a single monolithic piece with the rest of the extension rod 238, 306. In some examples a bumper (e.g., the first bumper 254 described above) may be formed as part of this larger diameter eyelet and/or secured with the eyelet on the extension rod 238. Other examples may include other locations for one or both of the extension rod aperture 282 and the piston 242 than that illustrated.

With reference to FIG. 3, the fork upper 178 may include a fork upper aperture 286 that extends through an interior facing surface 290 of the first fork upper leg 182 (i.e., a surface facing the second fork upper leg 186). In the illustrated example, the fork upper aperture 286 is located at an upper end of the first fork upper leg 182. Other examples may include other locations for the fork upper aperture 286. In some examples, the fork upper aperture 286 may extend only through the interior facing surface 290, and may not extend through an opposite, exterior facing surface of the first fork upper leg 182 (e.g., such that no aperture is visible from the exterior).

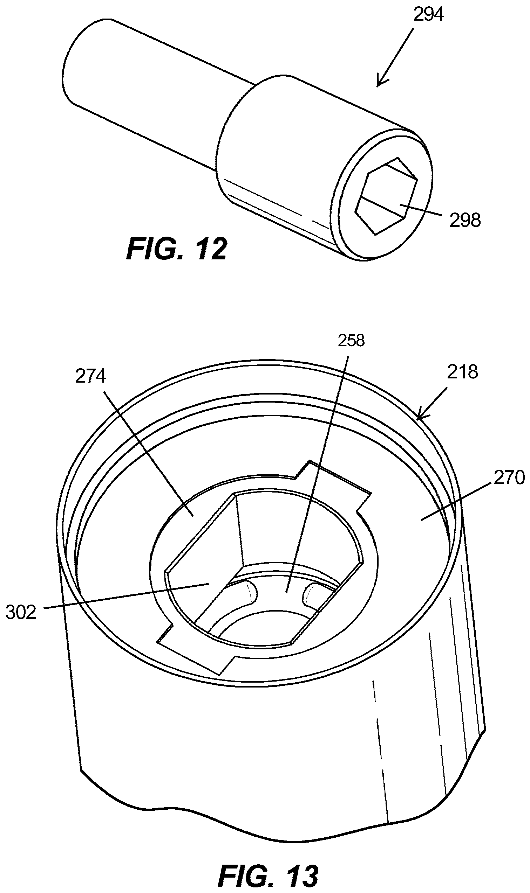

With reference to FIGS. 2 and 12, the front fork 130 may further include a fastener 294 (e.g., a cross bolt, a screw, a clip, or other type of fastener) that is sized and shaped to extend into the fork upper aperture 286 and also into the extension rod aperture 282 within the first fork upper leg 182, to secure the upper end of the extension rod 238 relative to the first fork upper leg 182, and thereby inhibit rotation of the extension rod 238 relative to the first fork upper leg 182.

In some examples, and as seen in FIG. 3, the front fork 130 may include a spacer 296 that is first received in the fork upper aperture 286 (FIG. 3 showing an exploded view with the fastener 294 and the spacer 296 being offset from the fork upper aperture 286 and positioned adjacent the second fork upper leg 186). The fastener 294 may extend into the spacer 296. Additionally, in some examples the fastener 294 may be threaded, and one or both of the fork upper aperture 286 and the extension rod aperture 282 (or spacers attached thereto) may similarly be threaded, such that the fastener 294 threadingly engages one or both of the first fork upper leg 182 and the extension rod 238 (or spacers attached thereto). Other examples may include other types or arrangements of fasteners 294 than that illustrated, as well as other shapes and sizes. As illustrated in FIG. 12, in some examples the fastener 294 may include a tooling engagement region 298 (e.g., a recessed or protruding region) that is sized and shaped to engage a tool (e.g., a wrench) that permits insertion or removal of the fastener 294.

With reference to FIGS. 8, 10, and 13, a keyed region may additionally, or alternatively, inhibit unwanted rotational movement, thereby increasing the overall torsional stiffness of the front fork 130. For example, and as described above, the extension rod 238 may have a non-circular cross-sectional shape (e.g., having one or more flat surfaces) along at least a portion of the extension rod 238 (e.g., between the extension rod aperture 282 and the piston 242). As illustrated in FIGS. 10 and 13, the keyed bushing 274 may have an aperture 302 that is dimensioned to slidably and non-rotatably receive the extension rod 238, to thereby facilitate axial sliding movement of the extension rod 238 along the axis A3, while inhibiting rotational movement of the extension rod 238 relative to the first body 218.

In the illustrated example, the keyed bushing 274 may be rotationally fixed to the bushing receiver 270 (e.g., via a further keyed arrangement), and the bushing receiver 270 may be rotationally fixed to the first body 218 (e.g., via a threaded engagement with the first body 218, a further keyed arrangement with the first body 218, and/or another arrangement).

In yet other examples, the first body 218 itself may include a region having an aperture that is sized and shaped to receive and guide the extension rod, or the first suspension element 198 overall may include another structure (e.g., other than the keyed bushing 274) that has an aperture that is sized and shaped to receive and guide the extension rod 238 while inhibiting rotation of the first body 218 relative to the second body 222.

Other examples may include various other types and arrangements of a keyed region (e.g., any element with an aperture having a shape corresponding to the non-circular shape of the extension rod 238) that forms part of the first suspension element 198, and inhibits or prevents rotational movement of the first body 218 relative to the second body 222.

With reference to FIG. 3, while only the first suspension element 198 has been described in detail, the second suspension element 202 may similarly include one or more similar components (including one or more anti-rotation features) such as those described above. For example, and as illustrated in FIG. 3, the second suspension element 202 may include its own, second elongate extension rod 306 that extends upwardly into the second fork upper leg 186, and may include a second extension rod aperture 308. In some examples, a piston may be coupled to a bottom end of the second elongate extension rod 306.

With continued reference to FIG. 3 ,the second fork upper leg 186 may have a second fork upper aperture (e.g., on an inside surface of the second fork upper leg 186, not seen in FIG. 3), and a second fastener 310 (similar to the fastener 294) and spacer 312 may pass through the second fork upper aperture and into the second extension rod aperture 308 to secure the second elongate extension rod 306 to the second fork upper leg 186.

With continued reference to FIG. 3, the second suspension element 202 may further include a first body 314. The first body 314 may slide axially relative to a second body (e.g., the second extension rod 306). In some examples, the first body 314 may be a reservoir that holds hydraulic fluid, and may act as a damping body (e.g., in examples where the second suspension element 202 is a hydraulic damper). The first body 314 may slide axially relative to the second extension rod 306, causing a damping action to occur within the first body 314. In some examples, the first body 314 may hold hydraulic fluid. In other examples, the first body 314 may not hold hydraulic fluid. For example, the first body 314 may act as at least part of an air spring, in which case the first body 314 may not hold any hydraulic fluid. Likewise, if a through-shaft damper is used on the second extension rod 306, the first body 314 may not hold any hydraulic fluid.

With continued reference to FIG. 3, in some examples both the first body 218 of the first suspension element 198 and the first body 314 of the second suspension element 202 may be (or include) air springs. In these embodiments, negative springs may be provided between a piston (e.g., the piston 242) and a bushing receiver (e.g., the bushing receiver 270) and/or a jam nut (e.g., the jam nut 266), as applicable, to tune the spring curves of the air springs.

In some examples, a through-shaft damper may be provided on the damper side of the front fork 130 (e.g., within the second suspension element 202). The through-shaft damper may encircle the second extension rod 306 and apply damping to the second extension rod 306 as the second extension rod 306 passes through it. These air spring and/or through-shaft damper embodiments may be desirable, for example, for longer length front forks 130 where coil springs may be particularly long.

With reference to FIGS. 1-13, the fork upper 178 may be formed sufficiently thick to handle loads applied by the first suspension element 198 and the second suspension element 202, yet be thin enough to receive seals and/or bushings where the fork upper 178 receives the first suspension element 198 and the second suspension element 202. In some examples, the extension rods 238, 306 described above may be maintained in oil baths for lubrication, and the seals and/or bushings may be used within the fork upper 178 to prevent oil from leaking out.

In other examples, the fork upper 178 may be designed to be narrower (e.g., for manufacturing reasons to help blend the fork upper 178 into a shape, and/or for performance reasons to decrease weight). In these examples, additional structures (e.g., collars, protrusions, etc.) may be added to (or integrally formed in a single monolithic piece with) the ends of the fork upper 178 (e.g., lower ends of the first fork upper leg 182 and the second fork upper leg 186) to reinforce against forces from the first suspension element 198 and the second suspension element 202, and to provide sufficient thickness at the ends of the fork upper 178 to receive seals and/or bushings.

With reference to FIGS. 3 and 8, during use of the bicycle 110, when the front wheel 114 experiences uneven terrain, the front wheel 114 may cause the first body 218 of the first suspension element 198 to slide upwardly over the piston 242 and into the first fork upper leg 182, thereby either compressing the air located within the interior chamber 234 (if the first suspension element 198 is acting as an air spring), or otherwise causing the piston 242 to slide down into the interior chamber 234 (e.g., if the piston 242 serves only as a guide and not as a damping element in the first suspension element 198). Similarly, the front wheel 114 may cause the first body 314 of the second suspension element 202 to slide upwardly and into the second fork upper leg 186, thereby generating a damping action.

During this sliding movement, the upper end of the extension rod 238 may remain fixed relative to the first fork upper leg 182, such that the extension rod 238 does not rotate relative to the first fork upper leg 182 (e.g., when braking rotational loads or other rotational loads are imparted onto the frame 122 or other portion of the bicycle 110). During this sliding movement, the keyed connection between the extension rod 238 and the keyed bushing 274 (or other keyed connections) may further inhibit the first body 218 from rotating relative to the second body 222. Accordingly, in some examples the only movement that may occur in the first suspension element 198 is the purely linear sliding movement of the first body 218 upwardly.

Similarly, in the second suspension element 202, the second extension rod 306 may remain fixed relative to the second fork upper leg 186, such that the second extension rod 306 does not rotate relative to the second fork upper leg 186. This overall arrangement may provide substantial torsional stiffness to the front fork 130. In some examples, the second suspension element 202 may also include a keyed connection (e.g., similar to the keyed connection described above in the first suspension element 198), or only the second suspension element 202 may include a keyed connection and the first suspension element 198 may not include a keyed connection. The keyed connection in the second suspension element 202 may include a keyed bushing or other keyed structure (e.g., similar to the keyed bushing 274), that limits rotation of the second extension rod 306 relative to the first body 314 (e.g., where the second extension rod 306 has a non-circular cross-sectional shape).

Other examples may include other numbers and arrangements of fasteners and/or keyed connections. In some examples, the front fork 130 may only include a single fastener 294 for the first suspension element 198 to inhibit rotation of the extension rod 238, or may include one fastener 294 for the first suspension element 198 and another fastener 294 for the second suspension element 202, to inhibit rotation of both the first extension rod 238 and the second extension rod 306. In some examples, no keyed regions are provided, and only one or more fasteners 294 are used to increase torsional stiffness. In yet other examples, no fasteners 294 are provided, and only one or more keyed features are used to increase torsional stiffness.

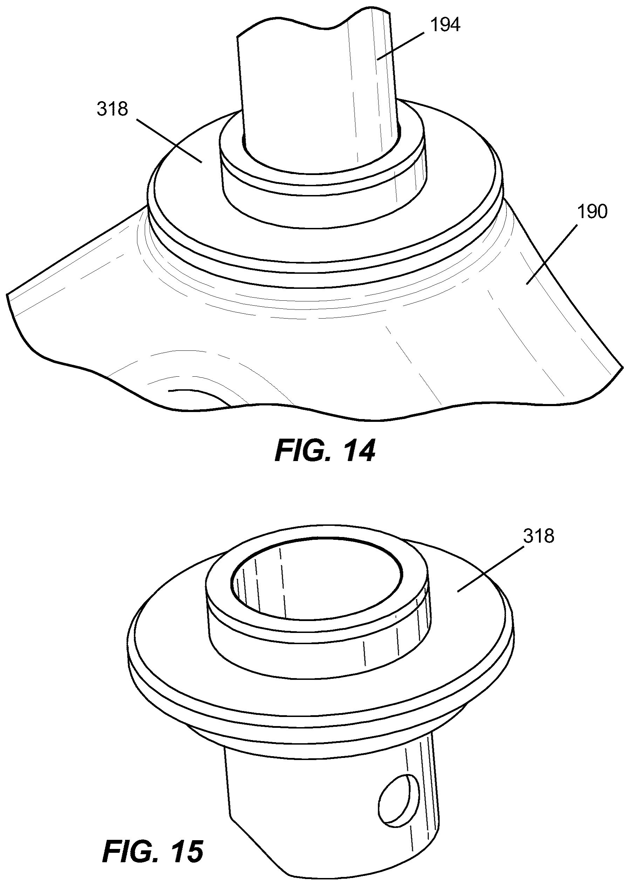

With reference to FIGS. 14 and 15, in some examples the front fork 130 may additionally include a press fit bushing 318 at the fork crown 190 that receives the steerer tube 194. With use of the press fit bushing 318, a constant diameter steerer tube 194 may be used, rather than needing to use a tapered steerer tube 194. The press fit bushing 318 may spread a bending moment at an interface of the steerer tube 194 and the fork crown 190 over a larger surface area so that the strength of the steerer tube 194 does not need to be increased by thickening it at the interface.

Some of the examples described herein may be further described by reference to the following numbered clauses:
1. A bicycle comprising:
   a front wheel;
   a rear wheel; and
   a frame supported by the front wheel and the rear wheel, the frame including a front fork having a fork upper with a fork upper leg;
   wherein the front fork further includes a suspension assembly having a suspension element positioned at least partially within the fork upper leg;
   wherein the suspension element includes a first body and a second body, wherein the first body is configured to slide axially over the second body along a longitudinal axis; and
   wherein the second body is secured to the fork upper leg with a fastener to inhibit rotation of the second body relative to the fork upper leg.
2. The bicycle of clause 1, wherein fork upper leg includes a fork upper aperture and the second body includes an extension rod, wherein the fastener extends through the fork upper aperture and is secured to the extension rod.
3. The bicycle of clause 2, wherein the extension rod includes an extension rod aperture, wherein the fastener is a cross bolt that passes through the fork upper aperture and into the extension rod aperture.
4. The bicycle of clause 3, wherein the extension rod aperture is located at an upper end of the extension rod, and the second body includes a piston at a lower end of the extension rod.
5. The bicycle of clause 4, wherein the first body includes an upper end and an opposite, lower end, and defines an interior chamber, wherein the piston is located within the interior chamber.
6. The bicycle of clause 5, wherein the suspension element includes a keyed region that inhibits rotational movement of the first body relative to the second body.
7. The bicycle of clause 6, wherein the extension rod has a non-circular cross-sectional shape along at least a portion of the extension rod between the extension rod aperture and the piston, and wherein the keyed region includes an aperture dimensioned to slidably and non-rotatably receive the extension rod.
8. The bicycle of clause 7, wherein the keyed region is part of a component fastened to the first body.
9. The bicycle of any of the preceding clauses, wherein the fork upper leg includes a fork upper aperture located on an interior facing surface of the fork upper leg, wherein the fork upper aperture is sized and shaped to receive the fastener.
10. The bicycle of any of the preceding clauses, wherein the suspension element includes a keyed region that inhibits rotational movement of the first body relative to the second body.
11. The bicycle of any of the preceding clauses, wherein the suspension element comprises a spring, and the second suspension element comprises a hydraulic damper.
12. The bicycle of any of the preceding clauses, wherein the second body includes an extension rod having an extension rod aperture an upper end of the extension rod, wherein the second body further includes a piston coupled to the extension rod at a lower end of the extension rod, and a spring retainer coupled to the extension rod, wherein the first suspension element includes a jam nut threaded to the first body, and a coil spring positioned between the spring retainer and the jam nut.
13. A bicycle comprising:
   a front wheel;
   a rear wheel;
   a frame supported by the front wheel and the rear wheel, the frame including a front fork having a fork upper with a fork upper leg;
   wherein the front fork further includes a suspension assembly having a suspension element positioned at least partially within the fork upper leg;
   wherein the suspension element includes a first body and a second body, wherein the first body is configured to slide axially over the second body along a longitudinal axis; and
   wherein the first suspension element includes a keyed region that inhibits rotational movement of the first body relative to the second body.
14. The bicycle of clause 13, wherein the second body includes an extension rod and a piston coupled to the extension rod.
15. The bicycle of clause 14, wherein the extension rod has a non-circular cross-sectional shape along at least a portion of the extension rod, and wherein the keyed region includes an aperture dimensioned to slidably and non-rotatably receive the extension rod.
16. The bicycle of clause 15, wherein the keyed region is part of a component fastened to the first body.
17. The bicycle of any of clauses 13-16, wherein the second body is secured to the fork upper leg with a fastener to inhibit rotation of the second body relative to the fork upper leg, wherein the fork upper leg includes a fork upper aperture located on an interior facing surface of the fork upper leg, and wherein the fork upper aperture is sized and shaped to receive the fastener.
18. The bicycle of any of clauses 13-17, wherein the keyed region includes a bushing receiver fixed to the first body and a keyed bushing coupled to the bushing receiver, wherein the keyed bushing includes an aperture.
19. The bicycle of any of clauses 13-18, wherein the suspension element is a first suspension element, wherein the suspension assembly further includes a second suspension element.
20. The bicycle of clause 19, wherein the first suspension element is a spring, and wherein the second suspension element is a hydraulic damper.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Various features and advantages of the disclosure are set forth in the following claims.

## Claims

1. A bicycle comprising:
a front wheel;
a rear wheel; and
a frame supported by the front wheel and the rear wheel, the frame including a front fork having a fork upper with a fork upper leg;
wherein the front fork further includes a suspension assembly having a suspension element positioned at least partially within the fork upper leg;
wherein the suspension element includes a first body and a second body, wherein the first body is configured to slide axially over the second body along a longitudinal axis; and
wherein the second body is secured to the fork upper leg with a fastener to inhibit rotation of the second body relative to the fork upper leg.

2. The bicycle of claim 1, wherein fork upper leg includes a fork upper aperture and the second body includes an extension rod, wherein the fastener extends through the fork upper aperture and is secured to the extension rod.

3. The bicycle of claim 2, wherein the extension rod includes an extension rod aperture, wherein the fastener is a cross bolt that passes through the fork upper aperture and into the extension rod aperture.

4. The bicycle of claim 3, wherein the extension rod aperture is located at an upper end of the extension rod, and the second body includes a piston at a lower end of the extension rod.

5. The bicycle of claim 4, wherein the first body includes an upper end and an opposite, lower end, and defines an interior chamber, wherein the piston is located within the interior chamber.

6. The bicycle of claim 5, wherein the suspension element includes a keyed region that inhibits rotational movement of the first body relative to the second body.

7. The bicycle of claim 6, wherein the extension rod has a non-circular cross-sectional shape along at least a portion of the extension rod between the extension rod aperture and the piston, and wherein the keyed region includes an aperture dimensioned to slidably and non-rotatably receive the extension rod.

8. The bicycle of claim 7, wherein the keyed region is part of a component fastened to the first body.

9. The bicycle of any of claims 1-8, wherein the fork upper leg includes a fork upper aperture located on an interior facing surface of the fork upper leg, wherein the fork upper aperture is sized and shaped to receive the fastener.

10. The bicycle of any of claims 1-9, wherein the suspension element includes a keyed region that inhibits rotational movement of the first body relative to the second body.

11. The bicycle of any of claims 1-10, wherein the suspension element is a first suspension element, wherein the suspension assembly further includes a second suspension element.

12. The bicycle of any of claims 1-11, wherein the second body includes an extension rod having an extension rod aperture an upper end of the extension rod, wherein the second body further includes a piston coupled to the extension rod at a lower end of the extension rod, and a spring retainer coupled to the extension rod, wherein the suspension element includes a jam nut threaded to the first body, and a coil spring positioned between the spring retainer and the jam nut.

13. The bicycle of claim 1, wherein the second body includes an extension rod and a piston coupled to the extension rod, wherein the extension rod has a non-circular cross-sectional shape along at least a portion of the extension rod, wherein the suspension element includes a keyed region that inhibits rotational movement of the first body relative to the second body, and wherein the keyed region includes an aperture dimensioned to slidably and non-rotatably receive the extension rod.

14. The bicycle of claim 13, wherein the keyed region is part of a component fastened to the first body.

15. The bicycle of claim 14, wherein the fork upper leg includes a fork upper aperture located on an interior facing surface of the fork upper leg, and wherein the fork upper aperture is sized and shaped to receive the fastener.
